# NEUE EUROPÄISCHE PATENTSCHRIFT

(11) **EP 3 037 493 B2**
(45) Veröffentlichungstag und Bekanntmachung des Hinweises auf die Entscheidung über den Einspruch: **17.01.2024**
(45) Hinweis auf die Patenterteilung: 14.03.2018
(21) Anmeldenummer: 15198561.1
(22) Anmeldetag: 09.12.2015
(51) Int. Cl.: C09J 7/21

(54) **KLEBEBAND, BASIEREND AUF EINEM NÄHVLIES-TRÄGER MIT BIKOMPONENTENFASERN**
ADHESIVE TAPE, BASED ON A SEWING NON-WOVEN FABRIC WITH BICOMPONENT FIBERS
BANDE ADHÉSIVE, À BASE D'UN SUPPORT NON-TISSÉ COMPRENANT DES FIBRES À DEUX COMPOSANTS

(30) Priorität: 23.12.2014 DE 102014119524
(43) Veröffentlichungstag der Anmeldung: 29.06.2016
(73) Patentinhaber: Coroplast Fritz Müller GmbH & Co. KG, 42279 Wuppertal (DE)
(72) Erfinder: WITTIG, Gülay, 44799 Bochum (DE); VORWERK, Guido, 48231 Warendorf (DE); LODDE, Christoph, 59439 Holzwickede (DE)
(74) Vertreter: Dr. Solf & Zapf Patent- und Rechtsanwalts PartG mbB

(56) Entgegenhaltungen:
- EP-A1- 1 990 393
- EP-A2- 0 995 782
- EP-A2- 0 995 782
- WO-A1-2006/105836
- DE-T2- 69 930 667
- US-B1- 6 451 146
- 1.2.2 chemiefasern aus synthetischen polymeren: In: WILHELM ALBRECHT et al: "Vliesstoffe", 1982, Stuttgart New York, XP055540152, pages 26-40,

## Beschreibung

Die Erfindung betrifft ein Klebeband, aufweisend einen ein Nähvlies umfassenden Träger und eine zumindest einseitig auf den Träger aufgetragene Klebstoffschicht, wobei das Nähvlies Fasern enthält, die vollständig aus Polyester (PES), insbesondere aus Polyethylenterephthalat (PET), bestehen und mittels mindestens eines Nähfadens vernäht sind, wobei das Nähvlies neben den aus Polyester (PES) bestehenden Fasern Bikomponentenfasern enthält.

Unter einem Nähvlies versteht man dabei eine textile Faserstruktur, die aus mehreren miteinander mittels mindestens eines Nähfadens vernähten Faserlagen besteht.

Ein Klebeband mit einem aus einem Nähvlies gebildeten Träger ist beispielsweise aus der EP 0 668 336 B2 bekannt. Bekannt ist weiterhin ein Klebeband mit einem Nähvlies-Träger, welches unter der Produktbezeichnung "Coroplast 8550 X" vertrieben wird. Diese Klebebänder eignen sich zum Umwickeln von Kabelsätzen in Fahrzeugen, um zum Beispiel Klappergeräusche zu vermeiden. Klappergeräusche werden zum Beispiel durch ein Inkontakttreten der Kabel mit der Karosserie oder anderen Teilen verursacht. Die Klebebänder müssen hinsichtlich ihrer Gebrauchseigenschaften einheitliche Standards, insbesondere die Norm LV312 (10/2009), erfüllen. Diese Norm klassifiziert Klebebänder im Hinblick auf ihre Eigenschaften für Anwendungen in der Automobilindustrie, vorzugsweise zum Bündeln und Umwickeln von Leitungen und Leitungssätzen. Die oben genannte Norm wurde von den Vertretern der Automobilhersteller AUDI AG, BMW AG, Daimler AG, Porsche AG und Volkswagen AG erarbeitet. Wenn nachfolgend die Norm LV 312 erwähnt wird, ist immer die zum Anmeldezeitpunkt gültige Ausgabe 10/2009 gemeint.

Zu den Gebrauchseigenschaften von Klebebändern zählen beispielsweise die Klebkraft auf dem Bandrücken und die Abrollkraft sowie die Handeinreißbarkeit. Weitere Gebrauchseigenschaften sind die Klebkraft auf bestimmten Materialien, die Dicke, die Reißdehnung, die Bruchkraft, die Weiterreißfestigkeit, die Abriebfestigkeit und die Temperaturbeständigkeit.

Je nach Einsatzgebiet in der Automobilindustrie müssen Klebebänder verwendet werden, die eine Temperaturbeständigkeit bei Temperaturen größer als 125 °C aufweisen müssen. Aufgrund der fehlenden Temperaturbeständigkeit ist bei Temperaturen größer als 125 °C die Anwendung von PES-Vlies-basierten Klebebändern bisher nicht möglich. Da die Einsatztemperatur auf 125 °C beschränkt ist, werden derartige Vliesklebebänder vorzugsweise im Fahrzeuginnenraum eingesetzt. Ebenso weisen diese im Fahrzeuginnenraum eingesetzten Vliesklebebänder aufgrund ihrer hohen Saugwirkung nur eine nachteilhaft mäßige Chemikalienbeständigkeit auf.

Aus der EP 0 995 782 A2 ist ein Klebeband der eingangs genannten Art bekannt, das in Bezug zu einem erfindungsgemäßen Klebeband als nächstliegender Stand der Technik angesehen werden kann, insofern in diesem Dokument ein Klebeband beschrieben ist, dessen Träger ein Nähvlies sein kann, welches wiederum aus PES-Fasern hergestellt sein kann. Bei Letzteren handelt es sich um Polyester-Frisch- oder Reißfasern mit einer Faserstärke von 1,5 dtex bis 5 dtex und einer Länge im Bereich zwischen 10 mm und 100 mm. Das Klebeband ist zum Umwickeln von Kabelsätzen geeignet. Bikomponenten-Schmelzfasern und Polyesterreißfasern des Klebebandes sind in einem Mengenverhältnis von 20 % bis 80 % in dem Vlies vorhanden. Die Bikomponentenfasern dienen als Bindefasern zur Verfestigung des Vlieses, indem sie durch Thermoplastifizierung und Abkühlen die Kreuzungspunkte der Fasern des Klebebandträgers verkleben und fixieren. Ab 120 °C beginnen sie zu erweichen.

Die WO 2006/105836 A1 offenbart ein Vlies, aber kein Klebeband und kein Nähvlies. Das Vlies enthält PES-Fasern und Bikomponentenfasern. Das bekannte Vlies weist zwar eine thermische Stabilität auf, da es beispielsweise bei einer Temperatur von 150 °C eine thermische Maßänderung von nur 2 % zeigt, jedoch besitzt das Vlies eine hohe Biegesteifigkeit, so dass bei einer Verwendung dieses Vlieses für ein Klebeband ein unerwünschtes Flagging auftreten würde. Ein derartiges Flagging von Klebebändern, d. h. das Abstehen des biegesteifen Klebeband-Endes, ist beim Umwickeln von Kabelsätzen nachteilig, da sich das Klebeband unter Einfluss von wechselnden Temperaturen, Erschüt-terungen und Nässe - oder nach einiger Zeit auch einfach spontan - wieder abwickeln kann.

Die EP 1 990 393 A1 offenbart ein Klebeband mit einem Gewebe. Das Gewebe wird durch Kalandrieren, Appretur, Texturieren, Intermingeln, oder Interlacing verfestigt. Das Gewebe der umfasst Quer- und Längsfäden, wobei die Querfäden eine Fadenstärke von mindestens 150 dtex und die Längsfäden eine Fadenstärke von mindestens 65 dtex aufweisen.

Der Erfindung liegt die Aufgabe zu Grunde, die Gebrauchseigenschaften bisher bekannter Klebebänder der eingangs genannten Art zu verbessern. Insbesondere soll ein Klebeband der eingangs genannten Art mit einer Temperaturbeständigkeit, die einen Einsatz auch außerhalb des Fahrgastinnenraums eines Kfz gestattet, zur Verfügung gestellt werden, wobei vorzugsweise auch dessen Chemikalienbeständigkeit verbessert werden soll.

Die Aufgabe wird erfindungsgemäß durch die Merkmale des Anspruchs 1 gelöst.

Bikomponentenfasern sind Chemiefasern, welche aus zwei Polymeren mit unterschiedlichen physikalischen und/ oder chemischen Eigenschaften hergestellt sind. Die Besonderheit von Bikomponentenfasern liegt in ihrem Kräu-selverhalten, welches durch das unterschiedliche Schrumpfvermögen der beiden Komponenten erreicht wird.

Hierbei sind unterschiedliche Faseraufbauten möglich, z. B. Bikomponentenfasern mit zwei nebeneinander angeordneten Polymeren einer Faser (englisch side-byside) oder Bikomponentenfasern mit einem Kernpolymer und einem diesen umgebenden Mantelpolymer (englisch centric-cover-core). Weiterhin sind auch Bikomponentenfasern denkbar, die wie ein Multifilament aufgebaut sind. Das heißt, dass die Faser aus einem Kernpolymer besteht, der von einem Mantelpolymer umgeben ist, wobei sich Ausläufer des Kernpolymers, z. B. radialsymmetrisch, im Faserquerschnitt zum Mantelpolymer erstrecken. Auch sind Hohlfasern mit ummantelnd angeordneten, verschiedenen Polymeren denkbar. Die Bikomponentenfaser kann auch aus einer Polymerfaser bestehen, in der Teilfasern eines zweiten Polymers inhomogen angeordnet sind (englisch matrix-fibrill).

Als Materialien der Bikomponentenfasern sind Polyester mit unterschiedlichen Schmelzpunkten auf der Basis von Polyethylenterephthalat (PET), Polybutylenterephthalat (PBT) und Polytrimethylenterephthalat (PTT) einsetzbar. Auch kommen für diese Fasern Materialien basierend auf Polyethylen (PE), Polypropylen (PP), Polyurethan (PUR), Polyethylennaphthalat (PEN) und Polyacrylnitril (PAN) in Frage.

Gemäß der Erfindung besitzt das Klebeband eine Temperaturbeständigkeit bei einer Temperatur in einem Bereich von 125 °C bis 175 °C bei einer Lagerungsdauer von 240 h bis 3000 h gemäß der Norm LV 312.

Insbesondere ist das Klebeband gemäß der Norm LV 312 handeinreißbar. Dies ermöglicht eine leichte Verarbeitung des Klebebandes.

Vorteilhafterweise besitzt das Klebeband eine Reißdehnung in einem Bereich von 10 %, gegebenenfalls 20 %, bis 80 %, vorzugsweise in einem Bereich von 50 % bis 60%.

Vorzugsweise weist das Klebeband eine Bruchkraft in einem Bereich von 15 N/cm bis 30 N/cm, vorzugsweise bis 50 N/cm, auf.

Insbesondere weist das Klebeband einen Kleberauftrag in einem Bereich von 20 g/m² bis 150 g/m^{z}, vorzugsweise von 30 g/m² bis 100 g/m², besonders bevorzugt nur bis 80 g/m^{z}, auf. Bedingt durch die geringere Luftdurchlässigkeit des erfindungsgemäßen Klebebandes mit Bikomponentenfaseranteil im Vergleich mit Bändern, welche herkömmliche Vliesträger ohne Bikomponentenanteil aufweisen, wird die Oberfläche des PET-Nähvlieses glatter, und zur Erzielung der gleichen Klebkräfte ist überraschenderweise mit Vorteil nur ein deutlich geringerer Kleberauftrag notwendig.

In einer vorteilhaften Ausführungsform der Erfindung weist das Klebeband eine Abriebfestigkeit im Bereich von Klasse B bis Klasse C gemäß der Norm LV 312 auf.

Erfindungsgemäß besitzen die aus Polyester (PES) bestehenden Fasern eine Faserlänge im Bereich von 60 mm bis 120 mm.

Die Bikomponentenfasern weisen eine Faserlänge im Bereich von 30 mm bis 55 mm auf.

Das Nähvlies besitzt einen Anteil an PES-Fasern in einem Bereich von 50 % bis 90 % und entsprechend einen Anteil an Bikomponentenfasern in einem Bereich von 50 % bis 10 %.

Gemäß der Erfindung weisen die aus Polyester (PES) bestehenden Fasern eine Faserstärke im Bereich von 2,0 dtex bis 4,0 dtex auf, wobei sie mit Nähfäden vernäht sind, die bevorzugt eine Fadenstärke im Bereich von vorzugsweise 40,0 dtex bis 60,0 dtex aufweisen können. Das Größenverhältnis von Faser-Feinheit zu Fadenstärke liegt demnach vorzugsweise in einem Bereich von 2 : 50 bis 4 : 50.

Die Bikomponentenfasern weisen eine Faserstärke im Bereich von 1,0 dtex bis 7,6 dtex auf, die vorzugsweise in einem Bereich von 1,5 dtex bis 5,0 dtex liegen kann. Das Größenverhältnis von Faser-Feinheit zu Fadenstärke liegt folglich vorzugsweise in einem Bereich von 1 : 50 bis 5 : 50. Weiterhin ist das Größenverhältnis der Feinheit der PES-Fasern zur Feinheit der Bikomponentenfasern bevorzugt etwa 1 : 1. Bei einer ähnlich großen Stärke beider Faserarten können dabei unter Berücksichtigung des jeweiligen Fasermaterials und der Faserlänge die Eigenschaften des Vlieses eingestellt werden.

Vorteilhafterweise weist das Nähvlies eine Dicke im Bereich von 0,10 mm bis 1,00 mm, vorzugsweise im Bereich von 0,15 mm bis 0,90 mm, gemäß der Norm LV 312 auf.

Insbesondere besitzt das Nähvlies ein Flächengewicht im Bereich von 50 g/m² bis 230 g/m², vorzugsweise in einem Bereich von 60 g/m^{z} bis 130 g/m².

Weitere vorteilhafte Ausgestaltungen der Erfindung ergeben sich aus der folgenden Figurenbeschreibung und den abhängigen Unteransprüchen.

Es zeigen:
- Fig. 1: eine schematische Ansicht eines erfindungsgemäßen Klebebandes mit einem erfindungsgemäßen Nähvlies,
- Fig. 2a: eine schematisiert dargestellte Ansicht einer Ausführungsform eines erfindungsgemäßen Nähvlieses mit Langfasern,
- Fig. 2b: eine Ansicht einer Langfaser und einer Kurzfaser des Nähvlieses,
- Fig. 3: eine Ansicht eines Nähvlieses bei der Herstellung,
- Fig. 4: eine tabellarische Übersicht (Tabelle 2) der Eigenschaften herkömmlicher Klebebänder im Vergleich mit einem erfindungsgemäßen Klebeband,
- Fig. 5: eine tabellarische Übersicht (Tabelle 5) der Ergebnisse von Chemikalienbeständigkeitsuntersuchungen gemäß LV 312 an PP-Leitungen mit einem herkömmlichen Klebeband "Coroplast 8550",
- Fig. 6: eine tabellarische Übersicht (Tabelle 6) der Ergebnisse von Chemikalienbeständigkeitsuntersuchungen gemäß LV 312 an PP-Leitungen mit einem herkömmlichen Standard-Klebeband "Coroplast 8550 X",
- Fig. 7: eine tabellarische Übersicht (Tabelle 7) der Ergebnisse von Chemikalienbeständigkeitsuntersuchungen gemäß LV 312 an PP-Leitungen mit einem erfindungsgemäßen Klebeband, welches einen Bikomponenten-Klebeband-Träger und eine Polyacrylat-Klebebeschichtung aufwies,
- Fig. 8: eine tabellarische Übersicht (Tabelle 8) der Ergebnisse von Chemikalienbeständigkeitsuntersuchungen gemäß LV 312 an PP-Leitungen mit einem erfindungsgemäßen Klebeband, welches einen Bikomponenten-Klebeband-Träger und eine Synthesekautschuk-Klebebeschichtung aufwies.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Die in der Beschreibung aufgeführten Eigenschafts-Parameter des Nähvlieses 2 und des Klebebandes 1 werden gemäß der Norm LV 312 (10/2009) bestimmt. Zu diesen Parametern zählen für das Nähvlies 2 die Dicke D₁, die Reißdehnung, die Bruchkraft, die Weiterreißfestigkeit, die Handeinreißbarkeit und die Luftdurchlässigkeit. Hierbei erfolgt für die Handeinreißbarkeit nachstehend eine Klasseneinteilung. Für das Klebeband 1 zählen zu diesen Parametern die Dicke D₂, die Reißdehnung, die Bruchkraft, die Klebkraft auf Stahl, die Klebkraft auf dem Bandrücken, die Abrollkraft, die Handeinreißbarkeit, die Temperaturbeständigkeit, die Abriebfestigkeit und die Geräuschdämpfung. Auch für die letzteren beiden Parameter erfolgt nachstehend eine Klasseneinteilung.

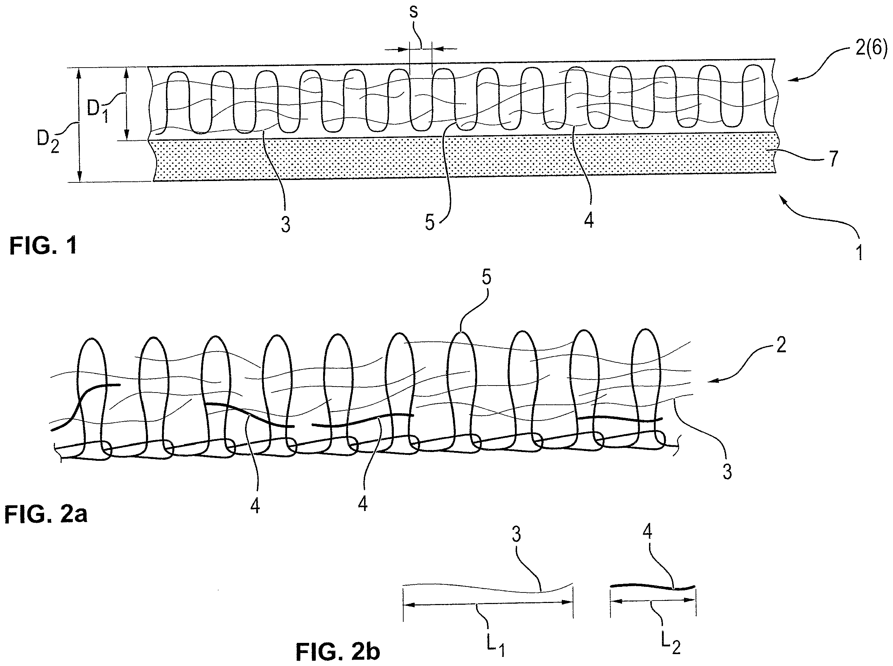

Fig. 1 zeigt ein erfindungsgemäßes Klebeband 1, aufweisend einen aus einem Nähvlies 2 gebildeten Träger 6 und eine einseitig auf dem Träger 6 aufgetragene Klebstoffschicht 7. Das Nähvlies 2 umfasst vorzugsweise ein textiles Vliesmaterial, welches ein textiles Flächengebilde aus einer Aneinanderreihung und/oder Aufeinanderschichtung geordneter und ungeordneter Fasern 3, 4 ist. Das Vliesmaterial kann aus längs der Bandverlaufsrichtung verlaufenden Längsfasern und quer zu den Längsfasern verlaufenden Querfasern oder einer vollkommenen Wirrfaserlage bestehen.

Erfindungsgemäß weist das Nähvlies 2 Fasern 3 aus Polyester (PES), vorzugsweise aus Polyethylenterephthalat (PET), auf. Das Nähvlies 2 enthält zwei Faserarten, d. h. PES-Fasern 3 und Bikomponentenfasern 4. Die Faserstärke der PES-Fasern 3 liegt im Bereich von 2,0 dtex bis 4,0 dtex, und die Faserstärke der Bikomponentenfasern 4 liegt im Bereich von 1,0 dtex bis 7,6 dtex, vorzugsweise 1,5 dtex bis 5,0 dtex. Zur Bildung des Nähvlieses 2 sind die PES-Fasern 3 und Bikomponentenfasern 4 vorteilhafterweise mit Nähfäden 5 vernäht, die eine Fadenstärke im Bereich von vorzugsweise 40,0 dtex bis 60,0 dtex aufweisen. Vorzugsweise sind die Nähfäden 5 mit einer Stichlänge s in einem Bereich von 0,8 mm bis 1,2 mm, vorzugsweise mit einer Stichlänge s von 1,0 mm in das Nähvlies 2 eingenäht. Unter Stichlänge s wird dabei der Abstand zwischen der Eintrittsstelle des Nähfadens 5 in das Fasergebilde und seiner Austrittsstelle verstanden. Insbesondere weist das Nähvlies 2 ein Flächengewicht im Bereich von 70 g/m² bis 90 g/m², vorzugsweise im Bereich von 75 g/m² bis 85 g/m², auf. Weiterhin weist das Nähvlies 2 vorzugsweise eine Dicke D₁ im Bereich von 0,10 mm bis 1,00 mm, insbesondere im Bereich von 0,15 mm bis 0,90 mm, besonders bevorzugt bis 0,60 mm, auf.

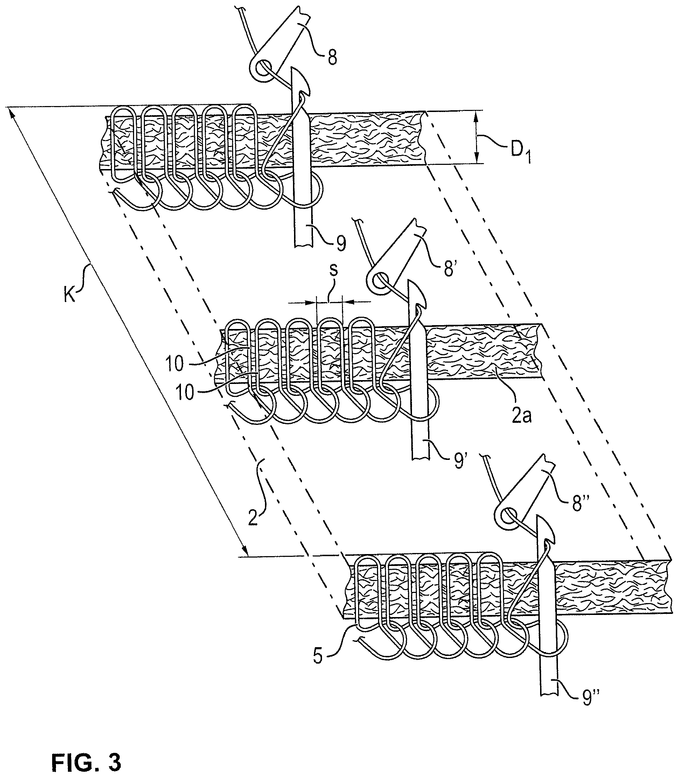

Die Herstellung eines Nähvlieses 2 erfolgt beispielsweise, wie es in Fig. 3 schematisch dargestellt ist. Hierbei zeigt Fig. 3 schematisch ein Nähvlies 2, welches für den Fall, dass der Wert der in Fig. 3 dargestellten Strecke K 25,4 mm beträgt, mit einer Feinheit F 3 hergestellt ist.

Die Feinheit F ist hierbei ein Maß für die Maschendichte. Sie beruht auf der "Englischen Feinheit", welche in einem bei Wirk- und Strickmaschinen angewandten Nummerierungssystem die Anzahl n der auf der Strecke K von einem englischen Zoll (25,4 mm) entfallenden Nähnadeln 9, 9', 9" und somit die Maschendichte angibt. In dem schematisch in Fig. 3 dargestellten Nähvlies 2 wurden z. B. zumindest n = 3 über eine Strecke K angeordnete Nadeln 9, 9', 9" zur Herstellung des Nähvlieses 2 verwendet. Die englische Feinheit ist in der DIN ISO 8188:2009-02 "Textilmaschinen und Zubehör - Teilung von maschenbildenden Maschinen" genormt. Erfindungsgemäß werden dabei Feinheiten im Bereich F 14 bis F 24, insbesondere eine Feinheit F 22 bevorzugt.

Beispielsweise werden zur Herstellung eines Nähvlieses 2 zwei Nähfäden-Systeme (d. h. zwei Barren) verwendet, um Stiche durch ein Rohvlies 2a auszubilden. Möglich sind jedoch auch Ein-Barren- oder Drei-Barren-Systeme. Bei dem Zwei-Barren-System wird ein Nähfaden 5 durch einen ersten Satz beweglicher Nähfadenführungen 8, 8' ,8", die durch eine erste Führungsbarre (nicht gezeigt) getragen werden, für einen zusammenwirkenden, vollständigen Gewindeeingriff mit den Nadeln 9, 9', 9" etc. über die Breite des Rohvlieses 2a geführt.

Zur Herstellung der Maschen im Nähvlies 2 wird beim Betrieb der Nähfaden 5 in Eingriff mit den Nadeln 9, 9', 9" bewegt, die wiederum den Nähfaden 5 in einer sich hin und her bewegenden Weise durch das Rohvlies 2a führen. Hierdurch wird eine Anordnung von zusammenwirkenden Nähfadenstichen 10 ausgebildet, die sich in zueinander beabstandeten Reihen entlang des Rohvlieses 2a erstreckt.

Nur beispielhaft und nicht beschränkend können die zusammenwirkenden Nähfadenstiche 10 in einer vollständigen Kettenstichkonfiguration gehalten werden, obwohl andere bekannte Stichanordnungen, z. B. Trikotstiche und dergleichen, ebenfalls verwendet werden können.

Insbesondere kann das Nähvlies 2 mit der Nähwirktechnologie "Maliwatt" hergestellt sein. Gemäß dem Maliwatt-Verfahren wird ein Rohvlies 2a verfestigt, indem dieses, z. B. ausgebildet als ein vorgelegter quer getäfelter Faserflor oder ein Wirrvlies, durch ein oder zwei Fadensysteme vernäht wird. Hierfür durchsticht ein Schiebernadel-Schließdrahtsystem die Faservorlage und zieht bei der Rückwärtsbewegung ein oder zwei eingelegte Nähfäden 5 durch das zu verfestigende Rohvlies 2a. Es folgen der Abschlag der vorhergehenden Masche und der Abzug der Ware nach unten.

Das Fadenmaterial der Nähfäden 5 kann teilweise oder vollständig aus textilen Fasern bestehen. Beispielsweise können Garne verwendet werden, wobei Garne aus Stapelfasern oder Filamenten verwendet werden können. Ein Stapelfasergarn besteht aus endlich langen Fasern, die beim Spinnen verdreht werden. Ein Filamentgarn besteht aus Filamenten. Ein Filament ist eine Faser unbegrenzter Länge (gemäß der Norm DIN 60000 (10/1990)) oder besitzt mindestens eine Länge von 1000 mm (gemäß der Norm DIN 60001 (10/1990)). Hingegen werden Fasern begrenzter Länge als Spinnfasern bezeichnet. Spinnfasern teilen sich wiederum in tatsächlich verspinnbare Stapelfasern und sehr kurze Flockfasern, wobei die Grenze bei 15 mm liegt. Nähfäden 5 können auch aus Spinnfasern hergestellt werden. Vorzugsweise werden für die Nähfäden 5 glatte Garne, insbesondere sogenannte vororientierte Garne (POY - Pre Oriented Yarn) oder sogenannte vollständig gezogene Garne (FDY - Fully Drawn Yarn), verwendet.

Die Herstellung eines Filamentgarns erfolgt durch die Verwirbelung der einzelnen Filamente. Insbesondere können die Nähfäden 5 von 24 bis 144 Filamente enthalten. Vorzugsweise liegt die Anzahl der Filamente in einem Bereich von 34 bis 38. Die Eigenschaften eines Ausführungsbeispiels des Nähvlieses 2 sind in der nachfolgenden Tabelle 1, Spalte 4 gezeigt.

Die Angabe "PES Virgin" in der Tabelle 1 für das Material der Fasern 3, 4 und den Nähfaden 5 bedeutet hierbei, dass die Fasern 3, 4 und der Nähfaden 5 vorzugsweise teilweise oder vollständig aus einem nicht recycelten Polyester bestehen.

Die Nähfäden 5 können teilweise oder vollständig aus recyceltem oder nicht recyceltem Polyester (PES), aus Polyamid (PA), aus Polyethylen (PE) oder Polypropylen (PP) oder aus Polyurethan (PUR) bestehen.

In dem erfindungsgemäß als Träger eingesetzten Nähvlies 2 haben die PES-Fasern 3 einen Anteil im Bereich von 50 % bis 90 % und die Bikomponentenfasern 4 entsprechend einen Anteil im Bereich von 50 % bis 10 %. Die Länge der PES-Fasern 3 ("Faser 1") liegt in einem Bereich von 60 mm bis 120 mm. Die Bikomponentenfasern 4 ("Faser 2") haben eine Länge in einem Bereich von 30 mm bis 55 mm.

Weiterhin weist das Nähvlies 2 eine Reißdehnung im Bereich von 13 % bis 25 % und eine Bruchkraft im Bereich von 20 N/cm bis 32 N/cm auf. Hierbei ist die Bruchkraft ein Maß für die Belastbarkeit des Klebebandes 1 während der Verwendung. Die Reißdehnung ist ein Maß für die Dehnbarkeit des Klebebandes 1. Die Weiterreißfestigkeit (MW = Mittelwert) beträgt 10.000 mN. Die Weiterreißfestigkeit bzw. Kerbfestigkeit ist die Eigenschaft eines Stoffes, auch bei Vorhandensein einer Einkerbung, nicht weiter zu reißen. Sie korreliert mit der Handeinreißbarkeit.

**Tabelle 1: Übersicht Trägermaterialien.**

| Parameter | Einheit | Standard PET-Nähvlies 80 g/m² | Erfindungsgemäß mit BikomponentenFasern |
|---|---|---|---|
| Feinheit | n/25mm | F 22 | F 22 |
| Fadenstärke | Dtex | 50 | 50 |
| Filamentanzahl | Anzahl | 36 | 36 |
| Stichlänge | Mm | 1,0 | 1,0 |
| Fadenmaterial | - | PES Virgin | PES Virgin |
| Fasermaterial PES-Faser | - | PES Virgin | PES Virgin |
| Fasermaterial Bikomponentenfaser | - | | Zwei Polymere |
| Faserstärke PES-Faser | Dtex | 2,1 | 2,0 - 4,0 |
| Faserstärke Bikomponentenfaser | Dtex | | 1,0 - 5,0 |
| Anteil PES-Faser | % | 100 | 50 - 90 |
| Anteil Bikomponentenfaser | % | 0 | 10 - 50 |
| Faserlänge Faser 1 | Mm | 76 | 60 - 120 |
| Faserlänge Faser 2 | Mm | 51 | 30 - 55 |
| Flächengewicht | g/m² | 80 +/- 5 | 80 +/- 5 |
| Dicke | Mm | 0,175 +/- 0,015 | 0,15 +/- 0,03 |
| Reißdehnunq | % | 15 - 35 | 20 - 80 |
| Bruchkraft | N/cm | 25 - 40 | 15 - 30 |
| Weiterreißfestigkeit | mN | MW 13.000 | MW 10.000 |
| Handeinreißbar | LV 312 | leicht | Sehr leicht |
| Luftdurchlässiqkeit | l/m² *s | 2500 - 3000 | 1.000 - 2.000 |

Das Nähvlies 2 ist sehr leicht handeinreißbar. Die Luftdurchlässigkeit liegt insbesondere in einem Bereich von 300 l/m²s bis 2500 l/m²s, vorzugsweise in einem Bereich von 400 l/m²s bis 2000 l/m²s. Dies ist abhängig vom eingesetzten Bikomponentenfaseranteil.

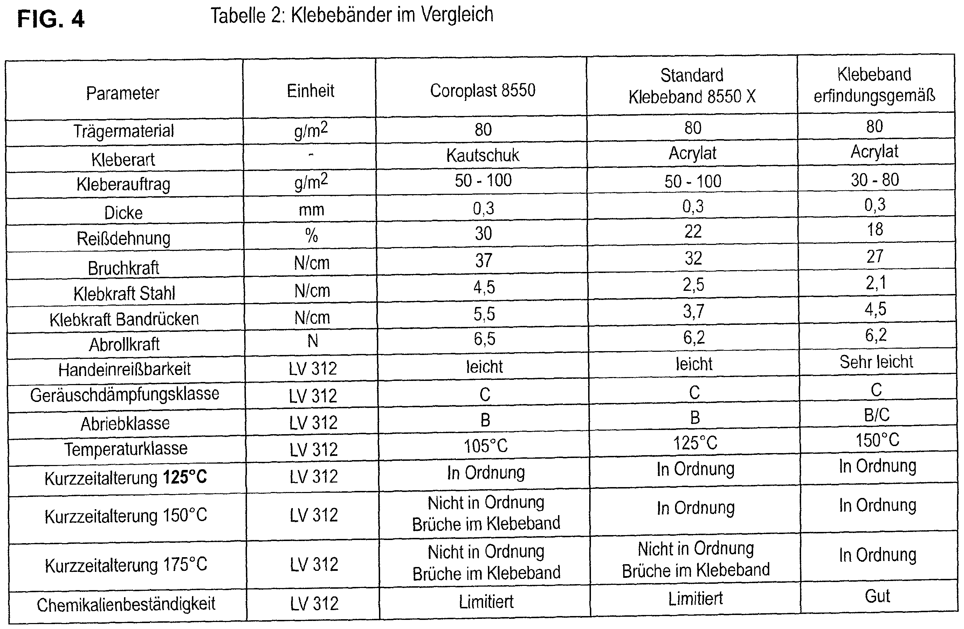

Die Verwendung eines Nähvlieses 2 als Träger 6 führt vorzugsweise zu einem Klebeband 1 mit den Eigenschaften, wie in sie im Vergleich mit herkömmlichen Klebebändern in Tabelle 2 (Fig. 4) in Spalte 5 gezeigt sind. Hierbei sind die in der Tabelle 2 aufgeführten Merkmale einzeln für sich oder in beliebigen Kombinationen erfindungswesentlich.

Die Klebstoffschicht 7 des erfindungsgemäßen Klebebandes 1 umfasst vorzugsweise druckempfindliche Haftklebstoffe, insbesondere basierend auf Polyacrylat, welche aufgrund ihrer guten Alterungsbeständigkeit eingesetzt werden können. Diese Acrylatklebstoffe können in der Regel entweder als Dispersion oder als mittels UV-Strahlung zu vernetzende Schmelzklebstoffe aufgetragen werden. Grundsätzlich möglich ist auch die Verwendung von Lösemittelacrylaten oder aber der Einsatz von AcrylatMonomermischungen oder Acrylat-Präpolymeren. Diese werden nach der Beschichtung entweder thermisch oder mittels UV-Strahlung ggf. polymerisiert und vernetzt. Darüber hinaus ist auch die Verwendung anderer Haftklebstoffklassen, wie z. B. von Klebstoffen auf Basis von Synthesekautschuk, wie SIS (Styren-Isopren-Styren-Copolymer) oder SBS (Styren-Butadien-Styren-Blockcopolymer), oder von Klebstoffen auf Silikon- oder Polyurethanbasis, möglich.

Für die Herstellung des Klebebandes 1 ist insbesondere ein Kleberauftrag auf dem Nähvlies-Träger 6 in einem Bereich von 30 g/m² bis 80 g/m² notwendig. Weiterhin besitzt das Klebeband 1 eine Reißdehnung von 18 % und eine Bruchkraft von 27 N/cm. Zudem beträgt die Klebkraft auf Stahl 2,1 N/cm, die Klebkraft auf dem Bandrücken 4,5 N/cm.

Das mit dem Nähvlies 2 hergestellte Klebeband 1 besitzt eine Abrollkraft von 6,2 N/cm. Die Abrollkraft ist hierbei die zum Abrollen einer Klebebandrolle erforderliche Kraft. Sie wirkt sich auf den Wickelzug bei der Bandagierung von Leitungssätzen aus, welcher sich z. B. auf die Wickelhärte eines Leitungsbaums auswirkt. Zu hohe Abrollkräfte können ein Verdrillen und damit ein Verkürzen, insbesondere von dünnen Leitungssträngen, zur Folge haben. Zu niedrige Abrollkräfte können Verarbeitungsprobleme und zusätzlich weiche Leitungsstränge mit unsauberen, lappigen Wicklungen ergeben.

Ferner entspricht die Geräuschdämpfung des Klebebandes 1 der Klasse C, und die Abriebbeständigkeit liegt in einem Bereich von Klasse B bis Klasse C. Eine Übersicht über die Abriebklassen gemäß der Norm LV 312 (10/ 2009) ist in der nachfolgenden Tabelle 3, und eine Übersicht über die Geräuschdämpfungsklassen gemäß der Norm LV 312 (10/ 2009) ist in der darauffolgenden Tabelle 4 gezeigt.

**Tabelle 3: Einteilung der Abriebeigenschaften nach LV 312 (10/2009)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | 15000 - 29999 Hübe |
| G Abriebschutz für Sonderanwendungen | ≥ 30000 Hübe |

**Tabelle 4: Einteilung der geräuschdämmenden Eigenschaften nach LV 312 (10/2009)**

| **Geräuschdämpfungsklasse** | **Anforderung** |
|---|---|
| A keine Geräuschdämpfung | 0 bis ≤ 2 dB(A) |
| B geringe Geräuschdämpfung | > 2 bis ≤ 5 dB(A) |
| C mittlere Geräuschdämpfung | > 5 bis ≤ 10 dB(A) |
| D hohe Geräuschdämpfung | > 10 bis ≤ 15 dB(A) |
| E sehr hohe Geräuschdämpfung | > 15 dB(A) |

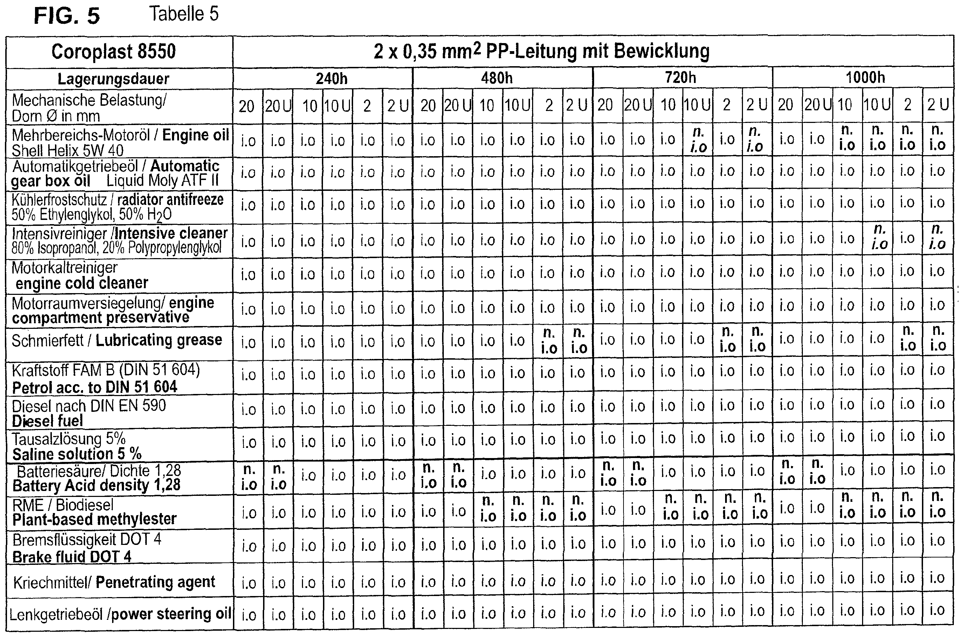

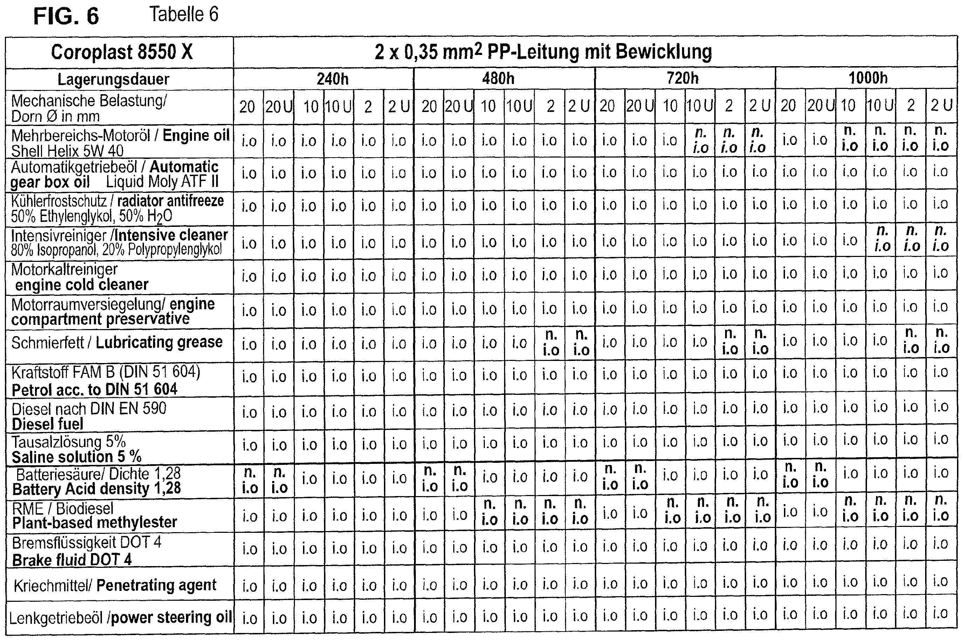

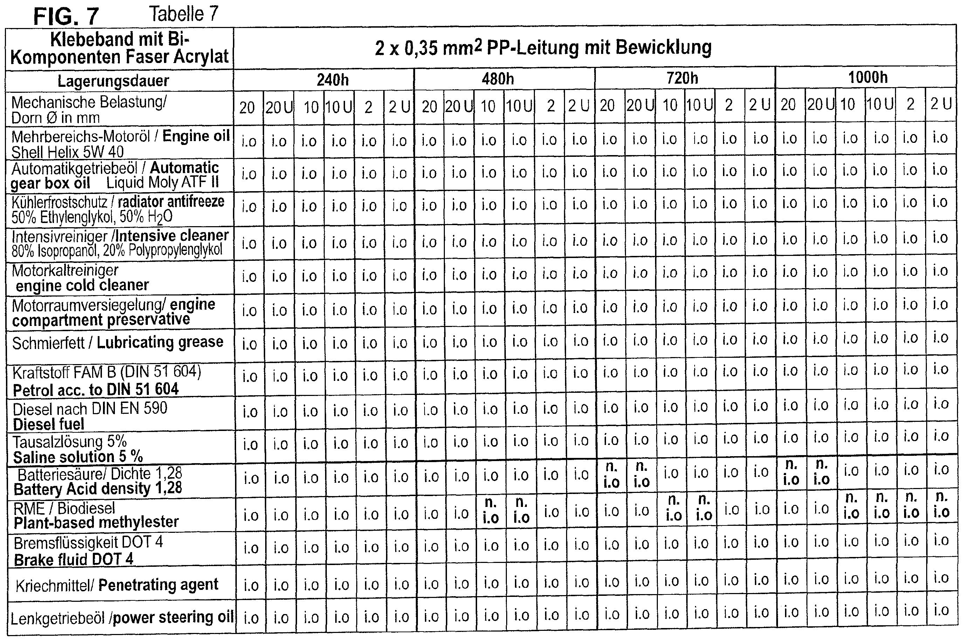

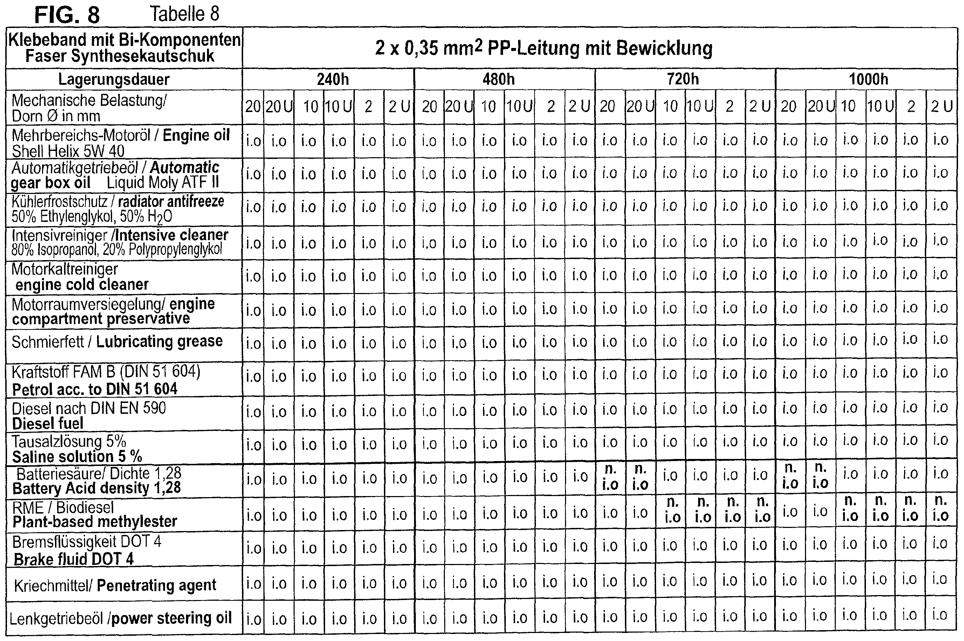

Chemikalienbeständigkeitsuntersuchungen, die hinsichtlich mechanischer Belastung Medieneinsatz und Prüfdauer nach den Vorschriften gemäß LV 312 an PP-Leitungen durchgeführt wurden, wie dies aus den Tabellen 5, 6, 7 und 8 (Fig. 5 bis 8) zu entnehmen ist, zeigen darüber hinaus, dass ein erfindungsgemäß als Klebebandträger 6 eingesetztes Bikomponentenfaservlies 2 - ausgerüstet sowohl mit einer Klebeschicht 7 aus einem Polyacrylat (Tabelle 7), als auch mit einer Klebeschicht 7 aus Synthesekautschuk (Tabelle 8) - überraschenderweise eine deutlich bessere Medienbeständigkeit zeigt als das bekannte, handelsübliche Klebeband "Coroplast 8550" (Tabelle 5) und das bekannte Standardprodukt "Coroplast 8550 X" (Tabelle 6). Die Abkürzung "i. O." in den Tabellen bedeutet dabei jeweils "in Ordnung" bzw. "Medienbeständigkeitstest bestanden", die Abkürzung "n. i. O." bedeutet dabei jeweils "nicht in Ordnung" bzw. "Medienbeständigkeitstest nicht bestanden".

### Bezugszeichenliste

- 1: Klebeband
- 2: Nähvlies
- 2a: Rohvlies
- 3: PES-Faser
- 4: Bikomponentenfaser
- 5: Nähfaden
- 6: Träger
- 7: Klebstoffschicht
- 8, 8', 8": Nähfadenführung
- 9, 9', 9": Nadel
- 10: Nähfadenstich
- L₁: Länge der Langfaser
- L₂: Länge der Kurzfaser
- D₁: Dicke des Vlieses
- D₂: Dicke des Klebebands
- s: Stichlänge
- n: die auf einen Englischen Zoll entfallenden Nähnadeln
- K: Strecke zur Bestimmung der Englischen Feinheit

## Patentansprüche

1. Klebeband (1), aufweisend einen ein Nähvlies (2) umfassenden Träger (6) und eine zumindest einseitig auf den Träger (6) aufgetragene Klebstoffschicht (7), wobei das Nähvlies (2) Fasern (3) enthält, die vollständig aus Polyester (PES) bestehen und mittels mindestens eines Nähfadens (5) vernäht sind, wobei das Nähvlies (2) neben den aus Polyester (PES) bestehenden Fasern (3) Bikomponentenfasern (4) enthält, wobei das Nähvlies (2) einen Anteil an aus Polyester (PES) bestehenden Fasern (3) in einem Bereich von 50 % bis 90 % aufweist und entsprechend einen Anteil an Bikomponentenfasern (4) in einem Bereich von 50 % bis 10 % aufweist, wobei die aus Polyester (PES) bestehenden Fasern (3) eine Faserstärke im Bereich von 2,0 dtex bis 4,0 dtex aufweisen, wobei die aus Polyester (PES) bestehenden Fasern (3) eine Faserlänge im Bereich von 60 mm bis 120 mm aufweisen, wobei die Bikomponentenfasern (4) eine Faserlänge im Bereich von 30 mm bis 55 mm aufweisen und eine Faserstärke im Bereich von 1,0 dtex bis 7,6 dtex aufweisen, wobei
das Klebeband (1) eine Temperaturbeständigkeit bei einer Temperatur in einem Bereich von 125 °C bis 175 °C gemäß der Norm LV 312 (10/2009) aufweist.

2. Klebeband (1) nach Anspruch 1,
**dadurch gekennzeichnet, dass** das Klebeband (1) gemäß der Norm LV 312 (10/2009) handeinreißbar ist.

3. Klebeband (1) nach Anspruch 1 oder 2,
**dadurch gekennzeichnet, dass** das Klebeband (1) eine Reißdehnung gemäß der Norm LV 312 (10/2009) in einem Bereich von 10 %, gegebenenfalls 20 %, bis 80 %, vorzugsweise in einem Bereich von 50 % bis 60 %, aufweist.

4. Klebeband (1) nach einem der Ansprüche 1 bis 3,
**dadurch gekennzeichnet, dass** das Klebeband (1) eine Bruchkraft gemäß der Norm LV 312 (10/2009) in einem Bereich von 15 N/cm bis 30 N/cm aufweist.

5. Klebeband (1) nach einem der Ansprüche 1 bis 4,
**dadurch gekennzeichnet, dass** das Klebeband (1) einen Kleberauftrag in einem Bereich von 20 g/m² bis 150 g/m², vorzugsweise in einem Bereich von 30 g/m² bis 100 g/m², besonders bevorzugt bis 80 g/m², aufweist.

6. Klebeband (1) nach einem der Ansprüche 1 bis 5,
**dadurch gekennzeichnet, dass** das Klebeband (1) einen Abrieb im Bereich von Klasse B bis Klasse C gemäß der Norm LV 312 (10/2009) aufweist.

7. Klebeband (1) nach einem der Ansprüche 1 bis 6,
**dadurch gekennzeichnet, dass** die aus PET bestehenden Fasern (3) eine Faserstärke im Bereich von 2,0 dtex bis 4,0 dtex aufweisen.

8. Klebeband (1) nach einem der Ansprüche 1 bis 7,
**dadurch gekennzeichnet, dass** die Bikomponentenfasern (4) eine Faserstärke im Bereich von 1,5 dtex bis 5,0 dtex aufweisen.

9. Klebeband (1) nach einem der Ansprüche 1 bis 8,
**dadurch gekennzeichnet, dass** das Nähvlies (2) eine Dicke (D₁) im Bereich von 0,10 mm bis 1,00 mm, insbesondere im Bereich von 0,15 mm bis 0,90 mm, bevorzugt bis 0,60 mm, gemäß der Norm LV 312 (10/2009) aufweist.

10. Klebeband (1) nach einem der Ansprüche 1 bis 9,
**dadurch gekennzeichnet, dass** das Nähvlies (2) ein Flächengewicht im Bereich von 50 g/m² bis 230 g/m², vorzugsweise in einem Bereich von 60 g/m² bis 130 g/m², besitzt.

11. Klebeband (1) nach einem der Ansprüche 1 bis 10,
**dadurch gekennzeichnet, dass** das Nähvlies (2) eine Luftdurchlässigkeit gemäß der Norm LV 312 (10/2009) in einem Bereich von 300 l/m²s bis 2500 l/m²s, vorzugsweise in einem Bereich von 400 l/m²s bis 2000 l/m²s, aufweist.

## Claims

1. Adhesive tape (1), having a backing (6) comprising a stitch-bonded web (2) and an adhesive layer (7) coated at least one-sidedly of the carrier (6), wherein the stitch-bonded web (2) contains fibres (3) consisting wholly of polyester (PES) and stitched together with at least one sewing thread (5), wherein the stitch-bonded web (2) contains bicomponent fibres (4) in addition to the fibres (3) consisting of polyester (PES), wherein the stitch-bonded web (2) includes the fibres (3) consisting of polyester (PES) in a proportion range from 50% to 90% and correspondingly includes the bicomponent fibres (4) in a proportion range from 50% to 10%, wherein the fibres (3) consisting of polyester (PES) have a fibre linear density in the range from 2.0 dtex to 4.0 dtex, wherein the fibres (3) consisting of polyester (PES) have a fibre length in the range from 60 mm to 120 mm, wherein the bicomponent fibres (4) have a fibre length in the range from 30 mm to 55 mm and a fibre linear density in the range from 1.0 dtex to 7.6 dtex, wherein the adhesive tape (1) is thermally stable to the standard LV 312 (10/2009) at a temperature in the range from 125 °C to 175 °C.

2. Adhesive tape (1) according to claim 1,
**characterized in that** the adhesive tape (1) is hand-tearable to the standard LV 312 (10/2009).

3. Adhesive tape (1) according to claim 1 or 2,
**characterized in that** the adhesive tape (1) has a breaking extension to the standard LV 312 (10/2009) in the range from 10%, optionally 20%, to 80%, preferably in the range from 50% to 60%.

4. Adhesive tape (1) according to any one of claims 1 to 3,
**characterized in that** the adhesive tape (1) has a breaking strength to the standard LV 312 (10/2009) in a range from 15 N/cm to 30 N/cm.

5. Adhesive tape (1) according to any one of claims 1 to 4,
**characterized in that** the adhesive tape (1) has an adhesive add-on in the range from 20 g/m² to 150 g/m² , preferably in the range from 30 g/m² to 100 g/m² , and more preferably up to 80 g/m².

6. Adhesive tape (1) according to any one of claims 1 to 5,
**characterized in that** the adhesive tape (1) has an abrasion to the standard LV 312 (10/2009) in the range from class B to class C.

7. Adhesive tape (1) according to any one of claims 1 to 6,
**characterized in that** the fibres (3) consisting of PET have a fibre linear density in the range from 2.0 dtex to 4.0 dtex.

8. Adhesive tape (1) according to any one of claims 1 to 7,
**characterized in that** the bicomponent fibres (4) have a fibre linear density in the range from 1.5 dtex to 5.0 dtex.

9. Adhesive tape (1) according to any one of claims 1 to 8,
**characterized in that** the stitch-bonded web (2) has a thickness (D₁) to the standard LV 312 (10/2009) in the range from 0.10 mm to 1.00 mm, especially in the range from 0.15 mm to 0.90 mm an preferably up to 0.60 mm.

10. Adhesive tape (1) according to any one of claims 1 to 9,
**characterized in that** the stitch-bonded web (2) has a surface weight in the range from 50 g/m² to 230 g/m² , preferably in the range from 60 g/m² to 130 g/m².

11. Adhesive tape (1) according to any one of claims 1 to 10,
**characterized in that** the stitch-bonded web (2) has an air transmission rate to the standard LV 312 (10/2009) in the range from 300 l/m²s to 2500 l/m²s, preferably in the range from 400 l/m²s to 2000 l/m²s.

## Revendications

1. Bande adhésive (1), comprenant un support (6) comprenant un non-tissé cousu (2) et une couche d'adhésif (7) appliquée au moins d'un côté sur le support (6), le non-tissé cousu (2) contenant des fibres (3), qui sont entièrement constituées de polyester (PES) et qui sont cousues au moyen d'au moins un fil de couture (5), le non-tissé cousu (2) contenant des fibres bicomposantes (4) en plus des fibres (3) constituées de polyester (PES), le non-tissé cousu (2) présentant une proportion de fibres (3) constituées de polyester (PES) dans une plage allant de 50 % à 90 %, et en conséquence une proportion de fibres bicomposantes (4) dans une plage allant de 50 % à 10 %, les fibres (3) constituées de polyester (PES) présentant une épaisseur de fibre dans la plage allant de 2,0 dtex à 4,0 dtex, les fibres (3) constituées de polyester (PES) présentant une longueur de fibre dans la plage allant de 60 mm à 120 mm, les fibres bicomposantes (4) présentant une longueur de fibre dans la plage allant de 30 mm à 55 mm, et une épaisseur de fibre dans la plage allant de 1,0 dtex à 7,6 dtex, la bande adhésive (1) présente une résistance à la température à une température dans la plage allant de 125 °C à 175 °C selon la norme LV 312 (10/2009).

2. Bande adhésive (1) selon la revendication 1,
**caractérisée en ce que** la bande adhésive (1) peut être déchirée à la main selon la norme LV 312 (10/2009).

3. Bande adhésive (1) selon la revendication 1 ou 2,
**caractérisée en ce que** la bande adhésive (1) présente un allongement à la rupture selon la norme LV 312 (10/2009) dans une plage allant de 10 %, éventuellement 20 %, à 80 %, de préférence dans une plage allant de 50 % à 60 %.

4. Bande adhésive (1) selon l'une quelconque des revendications 1 à 3,
**caractérisée en ce que** la bande adhésive (1) présente une force de rupture selon la norme LV 312 (10/2009) dans une plage allant de 15 N/cm à 30 N/cm.

5. Bande adhésive (1) selon l'une quelconque des revendications 1 à 4,
**caractérisée en ce que** la bande adhésive (1) présente une application de colle dans une plage allant de 20 g/m² à 150 g/m², de préférence dans une plage allant de 30 g/m² à 100 g/m², de manière particulièrement préférée de jusqu'à 80 g/m².

6. Bande adhésive (1) selon l'une quelconque des revendications 1 à 5,
**caractérisée en ce que** la bande adhésive (1) présente une abrasion dans la plage allant de la classe B à la classe C selon la norme LV 312 (10/2009).

7. Bande adhésive (1) selon l'une quelconque des revendications 1 à 6,
**caractérisée en ce que** les fibres (3) constituées de PET présentent une épaisseur de fibre dans la plage allant de 2,0 dtex à 4,0 dtex.

8. Bande adhésive (1) selon l'une quelconque des revendications 1 à 7,
**caractérisée en ce que** les fibres bicomposantes (4) présentent une épaisseur de fibre dans la plage allant de 1,5 dtex à 5,0 dtex.

9. Bande adhésive (1) selon l'une quelconque des revendications 1 à 8,
**caractérisée en ce que** le non-tissé cousu (2) présente une épaisseur (D₁) dans la plage allant de 0,10 mm à 1,00 mm, notamment dans la plage allant de 0,15 mm à 0,90 mm, de préférence de jusqu'à 0,60 mm, selon la norme LV 312 (10/2009).

10. Bande adhésive (1) selon l'une quelconque des revendications 1 à 9,
**caractérisée en ce que** le non-tissé cousu (2) présente un poids superficiel dans la plage allant de 50 g/m² à 230 g/m², de préférence dans une plage allant de 60 g/m² à 130 g/m².

11. Bande adhésive (1) selon l'une quelconque des revendications 1 à 10,
**caractérisée en ce que** le non-tissé cousu (2) présente une perméabilité à l'air selon la norme LV 312 (10/2009) dans une plage allant de 300 l/m²s à 2 500 l/m²s, de préférence dans une plage allant de 400 l/m²s à 2 000 l/m²s.
